# EUROPEAN PATENT APPLICATION

(11) **EP 2 372 180 A1**
(43) Date of publication of application: **05.10.2011**
(21) Application number: 09830344.9
(22) Date of filing: 27.11.2009
(51) Int. Cl.: F16D 3/223

(54) **FIXED CONSTANT VELOCITY UNIVERSAL JOINT**

(30) Priority: 02.12.2008 JP 2008307543; 02.12.2008 JP 2008307546; 13.11.2009 JP 2009259440
(71) Applicant: NTN Corporation, Osaka-shi, Osaka 550-0003 (JP)
(72) Inventor: OOBA Hirokazu, Iwata-shi Shizuoka 438-0037 (JP); KURODA Masayuki, Takarazuka-shi Hyogo 665-0022 (JP); KURA Hisaaki, Iwata-shi Shizuoka 438-0037 (JP); SUGIYAMA Tatsuro, Iwata-shi Shizuoka 438-0037 (JP); FUJIO Teruaki, Iwata-shi Shizuoka 438-0037 (JP)
(74) Representative: Grünecker, Kinkeldey, Stockmair & Schwanhäusser Anwaltssozietät
(86) International application number: PCT/JP2009/070003
(87) International publication number: WO 2010/064577

(57) **Abstract**

Wedge angles are formed between mutually facing central track-groove portions (11b, 12b, 21b, 22b) of an outer joint member (1) and an inner joint member (2). Track grooves (11, 12) provided to the outer joint member (1) and track grooves (21, 22) provided to the inner joint member (2) include a first pair of track grooves (11, 21) respectively including the central track-groove portions (11b, 21b) forming therebetween the wedge angle (α) opening to an opening side of the outer joint member (1) under a state in which an operating angle is 0°, and a second pair of track grooves (12, 22) respectively including the central track-groove portions (12b, 22b) oppositely forming therebetween the wedge angle (β) opening to an inner-end side of the outer joint member (1) under the state in which the operating angle is 0°. Both the first track groove (11) and the second track groove (12) of the outer joint member (1) include opening-side track-groove portions (11c, 12c) connected respectively to the central track-groove portions (11b, 12b) directly, each of the opening-side track-groove portions (11c, 12c) being formed in such a shape as to be free from an undercut toward the opening side. Accordingly, it is possible to manufacture at low cost a high-efficient fixed type constant velocity universal joint which involves less torque loss.

## Description

### Technical Field

The present invention relates to a fixed type constant velocity universal joint.

### Background Art

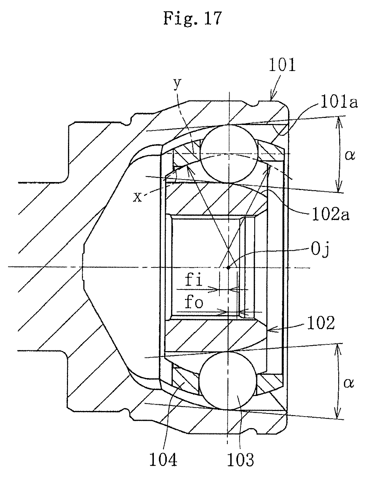

A plunging type constant velocity universal joint is incorporated into an inboard side of a front drive shaft for automobiles, and a fixed type constant velocity universal joint is incorporated into an outboard side thereof. In the fixed type constant velocity universal joint used on the outboard side, normally, in order to secure operability, as illustrated in Fig. 17, a curvature center of a ball-raceway center line x in a track groove provided to an outer joint member 101 is offset to one axial side relative to a j oint center Oj on an axis, and a curvature center of a ball-raceway center line y in a track groove provided to an inner joint member 102 is offset to another axial side relative to the joint center Oj on the axis. Offset amounts fo and fi are equal to each other. Those offsets cause a wedge angle α to be formed in a ball track formed of the track groove 101a of the outer joint member 101 and the track groove 102a of the inner joint member 102, the track groove 102a facing the track groove 101a. As a result, such a force as to hold balls 103 and a cage 104 within planes obtained by bisection of an operating angle comes into action. Normally, under a state in which an operating angle is 0, in all of the ball tracks, the wedge angle α is in such a direction as to open to an opening side of the outer joint member 101.

In this structure, each of the balls 103 receives an axial component force in accordance with the wedge angle α from the track groove 101a of the outer joint member and the track groove 102a of the inner joint member. Thus, the balls 103 press the cage 104 into the opening side of the outer joint member. As a result, the axial component force (spherical force) comes into action in spherical fitting parts between the outer joint member 101 and the cage 104 and between the inner joint member 102 and the cage 104. The spherical force leads to heat generation of the constant velocity universal joint, which increases loss of torque-to-be-transmitted.

In order to solve the above-mentioned problem, JP 3111930 B (Patent Literature 1) discloses a constant velocity universal joint in which ball tracks each forming a wedge angle oppositely opening in the axial direction are used instead of the above-mentioned plurality of ball tracks. With this structure, the axial component forces acting on the balls are counterbalanced, and hence it is possible to reduce contact pressure in the spherical fitting parts, which enables reduction of loss of torque-to-be-transmitted.

Further, as disclosed in JP 2004-169915 A (Patent Literature 2), there has been proposed a constant velocity universal joint in which the ball tracks each forming the wedge angle oppositely opening in the axial direction are used instead of the above-mentioned plurality of ball tracks, and in which an opening-side end portion of each of the track grooves of the outer joint member is formed as a circular arc having a center on an outside of the outer joint member so that high operating angles are formed.

### Citation List

### Patent Literature

[PTL 1] JP 3111930 B
[PTL 2] JP 2004-169915 A

### Summary of Invention

### Technical 1 Problems

However, in the structure disclosed in Patent Literature 1, there exist track grooves each having an undercut formed on the opening side of the outer joint member. Thus, when high operating angles are formed, the torque transmitting balls are liable to drop from the track grooves, and hence it is difficult to form high operating angles.

Meanwhile, in the structure disclosed in Patent Literature 2, although high operating angles themselves can be formed, the wedge angle becomes higher at the high operating angles, and hence load which acts from the balls to the cage becomes higher in accordance therewith. Thus, there is such a risk that strength of the cage is insufficient, which is an obstacle to downsizing of the joint. Further, the track grooves of the inner joint member and the track grooves of the outer joint member largely vary in radial dimension. Thus, i t is difficult to perform near-net shaping at the time of forging of the inner joint member and the outer joint member. Still further, when the operating angle of the constant velocity universal joint is 0°, the track groove forming the wedge angle opening to the opening side of the outer joint member has a track depth small on the inner-end side of the outer joint member. Thus, allowable load torque at high operating angles decreases.

In view of the above-mentioned problems, the present invention has been made to achieve such an object as to manufacture at low cost a high-efficient fixed type constant velocity universal joint which involves less torque loss.

Further, it is also an object of the present invention to provide a fixed type constant velocity universal joint capable of forming high operating angles and excellent in strength and durability at the high operating angles.

### Solution to Problems

In order to achieve the above-mentioned objects, the present invention provides a fixed type constant velocity universal joint, including: an outer joint member which has an inner spherical surface provided with a plurality of track grooves extending in an axial direction, and has an opening side and an inner-end side spaced apart from each other in the axial direction; an inner joint member having an outer spherical surface provided with a plurality of track grooves extending in the axial direction; torque transmitting balls arranged between the plurality of track grooves of the inner joint member and the plurality of track grooves of the outer joint member facing each other; and a cage spherically fitting to both the inner spherical surface of the outer joint member and the outer spherical surface of the inner joint member, and holding the torque transmitting balls, in which wedge angles (α, β) are formed respectively between central track-groove portions (11b, 21b) and between central track-groove portions (12b, 22b), the central track-groove portions (11b, 12b, 21b, 22b) being positioned in a normal angular range of the plurality of track grooves (11, 12) of the outer joint member and the plurality of track grooves (21, 22) of the inner joint member facing each other, in which the plurality of track grooves (11, 12) provided to the outer joint member and the plurality of track grooves (21, 22) provided to the inner joint member include: a first pair of track grooves (11, 21) respectively including the central track-groove portions (11b, 21b) forming therebetween the wedge angle (α) opening to the opening side of the outer joint member under a state in which an operating angle of the fixed type constant velocity universal joint is 0°; and a second pair of track grooves (12, 22) respectively including the central track-groove portions (12b, 22b) oppositely forming therebetween the wedge angle (β) opening to the inner-end side of the outer joint member under the state in which the operating angle of the fixed type constant velocity universal joint is 0°, in which both the first track groove (11) and the second track groove (12) of the outer joint member include opening-side track-groove portions (11c, 12c) connected respectively to the central track-groove portions (11b, 12b) directly or through intermediation of respective intermediate track-groove portions (11d, 12d), each of the opening-side track-groove portions (11c, 12c) being formed in such a shape as to be free from an undercut toward the opening side, and in which the first track groove (21) and the second track groove (22) of the inner joint member are formed in such shapes as to be mirror-image symmetrical with the first track groove (11) and the second track groove (12) of the outer joint member as respective counterparts thereof with respect to a joint-center plane.

Further, the present invention provides a fixed type constant velocity universal joint, including: an outer joint member which has an inner spherical surface provided with a plurality of track grooves extending in an axial direction, and has an opening side and an inner-end side spaced apart from each other in the axial direction; an inner joint member having an outer spherical surface provided with a plurality of track grooves extending in the axial direction; torque transmitting balls arranged between the plurality of track grooves of the inner joint member and the plurality of track grooves of the outer joint member facing each other; and a cage spherically fitting to both the inner spherical surface of the outer joint member and the outer spherical surface of the inner joint member, and holding the torque transmitting balls, in which wedge angles (α, β) are formed respectively between central track-groove portions (11b, 21b) and between central track-groove portions (12b, 22b), the central track-groove portions (11b, 12b, 21b, 22b) being positioned in a normal angular range of the plurality of track grooves (11, 12) of the outer joint member and the plurality of track grooves (21, 22) of the inner joint member facing each other, in which the plurality of track grooves (11, 12) provided to the outer joint member and the plurality of track grooves (21, 22) provided to the inner joint member include: a first pair of track grooves (11, 21) respectively including the central track-groove portions (11b, 21b) forming therebetween the wedge angle (α) opening to the opening side of the outer joint member under a state in which an operating angle of the fixed type constant velocity universal joint is 0°; and a second pair of track grooves (12, 22) respectively including the central track-groove portions (12b, 22b) oppositely forming therebetween the wedge angle (β) opening to the inner-end side of the outer joint member under the state in which the operating angle of the fixed type constant velocity universal joint is 0°, in which both the first track groove (11) and the second track groove (12) of the outer joint member include opening-side track-groove portions (11c, 12c) connected respectively to the central track-groove portions (11b, 12b) directly or through intermediation of respective intermediate track-groove portions (11d, 12d), each of the opening-side track-groove portions (11c, 12c) being formed to be linear in the axial direction, in which the first track groove (21) and the second track groove (22) of the inner joint member are formed in such shapes as to be mirror-image symmetrical with the first track groove (11) and the second track groove (12) of the outer joint member as respective counterparts thereof with respect to a joint-center plane, and in which both the first track groove (11) and the second track groove (12) of the outer joint member include inner-end-side track-groove portions (11a, 12a) connected respectively to the central track-groove portions (11b, 12b) directly or through intermediation of the respective intermediate track-groove portions (11d, 12d), each of the inner-end-side track-groove portions (11a, 12a) being formed in a curved shape.

Further, the present invention provides a fixed type constant velocity universal joint, including: an outer joint member which has an inner spherical surface provided with a plurality of track grooves extending in an axial direction, and has an opening side and an inner-end side spaced apart from each other in the axial direction; an inner joint member having an outer spherical surface provided with a plurality of track grooves extending in the axial direction; torque transmitting balls arranged between the plurality of track grooves of the inner joint member and the plurality of track grooves of the outer joint member facing each other; and a cage spherically fitting to both the inner spherical surface of the outer joint member and the outer spherical surface of the inner joint member, and holding the torque transmitting balls, in which wedge angles (α, β) are formed respectively between central track-groove portions (11b, 21b) and between central track-groove portions (12b, 22b), the central track-groove portions (11b, 12b, 21b, 22b) being positioned in an operating-angle range which is larger than a normal angular range of the plurality of track grooves (11, 12) of the outer joint member and the plurality of track grooves (21, 22) of the inner joint member facing each other, and has a relatively high frequency of use, in which the plurality of track grooves (11, 12) provided to the outer joint member and the plurality of track grooves (21, 22) provided to the inner joint member include : a first pair of track grooves (11, 21) respectively including the central track-groove portions (11b, 21b) forming therebetween the wedge angle (α) opening to the opening side of the outer joint member under a state in which an operating angle of the fixed type constant velocity universal joint is 0°; and a second pair of track grooves (12, 22) respectively including the central track-groove portions (12b, 22b) oppositely forming therebetween the wedge angle (α) opening to the inner-end side of the outer joint member under the state in which the operating angle of the fixed type constant velocity universal joint is 0°, in which both the first track groove (11) and the second track groove (12) of the outer joint member include opening-side track-groove portions (11c, 12c) connected respectively to the central track-groove portions (11b, 12b), each of the opening-side track-groove portions (11c, 12c) being formed in such a shape as to be free from an undercut toward the opening side, and in which the first track groove (21) and the second track groove (22) of the inner joint member are formed in such shapes as to be mirror-image symmetrical with the first track groove (11) and the second track groove (12) of the outer joint member as respective counterparts thereof with respect to a joint-center plane.

Note that, the "normal angle" represents an operating angle formed in a fixed type constant velocity universal joint of a front drive shaft when a steering of an automobile with one person on board is switched to a straightforward mode on a horizontal and flat road surface. Normally, the normal angle is selected and determined within a range of from 2° to 15° in accordance with design conditions for various vehicle types. The "normal angular range" represents a range in which, in the fixed type constant velocity universal joint forming the normal angle, the plurality of track grooves of the inner joint member and the plurality of track grooves of the outer joint member are held in contact with the torque transmitting balls. The "operating angle which is higher than a normal angle and has a relatively high frequency of use" does not represent a high operating angle formed, for example, at the time of right turning and left turning at a traffic intersection but represents an operating angle formed at the time of continuous running on a curved road, the operating angles being formed in the fixed type constant velocity universal joint of the above-mentioned automobile. This is also determined in accordance with the design conditions for various vehicle types. The "operating angle which is higher than a normal angle and has a relatively high frequency of use" is aimed at approximately 20°. The "operating-angle range which is larger than a normal angular range and has a relatively high frequency of use" represents a range in which, in the fixed type constant velocity universal joint forming the "operating angle which is higher than a normal angle and has a relatively high frequency of use", the plurality of track grooves of the inner joint member and the plurality of track grooves of the outer joint member are held in contact with the torque transmitting balls.

In the above-mentioned structures, within the normal angular range or the operating-angle range which is larger than the normal angular range and has a relatively high frequency of use (hereinafter, collectively described as "within a range of the normal angle and the like"), the following two types are formed: the central track-groove portions (11b, 21b) forming the wedge angle (α) opening to the opening side of the outer joint member; and the central track-groove portions (12b, 22b) oppositely forming the wedge angle (β) opening to the inner-end side of the outer joint member. In this case, during use within the range of the normal angle and the like, axial component forces are counterbalanced which act on the torque transmitting balls from the plurality of track grooves of the outer joint member and the plurality of track grooves of the inner joint member. Thus, it is possible to reduce a spherical force acting between the cage and the inner joint member and a spherical force acting between the cage and the outer joint member, and hence to reduce torque loss. Further, the wedge angle opening to the inner-end side of the outer joint member is formed only in a part of a region of each of the plurality of track grooves of the outer joint member. Simultaneously, the plurality of track grooves of the inner joint member are formed in such shapes as to be mirror-image symmetrical with the plurality of track grooves of the outer joint member as the respective counterparts thereof with respect to the joint-center plane. Thus, in comparison with a case where the wedge angles of this type are formed at every operating angle, processing on the plurality of track grooves of the outer joint member and the plurality of track grooves of the inner joint member is facilitated, and hence cost reduction can be achieved.

The opening-side track-groove portions (11c, 12c) connected respectively to the central track-groove portions (11b, 12b) of the outer joint member, specifically, the opening-side track-groove portions (11c, 12c) connected directly to the track-groove portions (11b, 12b) or connected thereto through intermediation of the respective intermediate track-groove portions (11d, 12d) are each formed in a shape free from an undercut toward the opening side (for example, to be linear in the axial direction). Thus, even in a state of high operating angles, the torque transmitting balls do not drop from the end portions on the opening side of the ball tracks, and hence high operating angles can be formed in the constant velocity universal joint. Further, the plurality of track grooves of each of the outer joint member and the inner joint member are simplified in shape as a whole. Thus, for example, at the time of formation of the outer joint member and the inner joint member by forging, it is possible to achieve near-net shaping, and hence to reduce manufacturing cost.

Axial opening directions of the wedge angles (α, β) formed respectively between the central track-groove portions (11b, 21b) and between the central track-groove portions (12b, 22b) as the respective counterparts between the inner joint member and the outer joint member are free from being changed in the range of the normal angle and the like and are set to be the same as axial opening directions of other wedge angles formed respectively therebetween at the operating angle of 0°. In the range of the normal angle and the like, at least a part of the axial component forces is constantly counterbalanced which act on the torque transmitting balls from the plurality of track grooves of the outer joint member and the plurality of track grooves of the inner joint member. Accordingly, in the range of the normal angle and the like, generation of the spherical forces can be suppressed.

A ball-raceway center line (x) of at least one of the plurality of track grooves (11, 12) of the outer joint member may be partially formed in an inclined linear shape, or have one or two curvature centers within a range of the central track-groove portion (within the range of the normal angle and the like).

In the case where the two curvature centers are arranged within the range of the central track-groove portion, when the two curvature centers are arranged respectively on a radially outer side and a radially inner side of each of the plurality of track grooves of the outer joint member, each of the plurality of track grooves can be made smoothly continuous with each other.

Each of the plurality of track grooves of the outer joint member, which constitutes corresponding one of the wedge angle (α) opening to the opening side of the outer joint member and the wedge angle (β) opening to the inner-end side of the outer joint member under the state in which the operating angle is 0°, may include a circular-arc portion (11a, 12a) arranged on the inner-end side relative to the central track-groove portion (within the range of the normal angle and the like) and having another curvature center of the ball-raceway center line (x) on a joint center. In conventional fixed type constant velocity universal joints, in each of the plurality of track grooves of the outer joint member, the curvature center of the ball-raceway center line is offset to the opening side relative to the joint center, and hence the track depth is apt to be small on the inner-end side of each of the plurality of track grooves of the outer joint member. However, as described above, when the curvature center of the ball-raceway center line (x) is arranged on the joint center, the track depth on the inner-end side can be increased, and hence allowable load torque at high operating angles can be increased. When the curvature center of the ball-raceway center line (x) in the circular-arc portion is arranged on the inner-end side relative to the joint center, the track depth in a high-operating-angle region can be further increased.

A center of an outer spherical surface of the cage and a center of an inner spherical surface of the cage are arranged at the same position, the outer spherical surface of the cage fitting to the inner spherical surface of the outer joint member, the inner spherical surface of the cage fitting to the outer spherical surface of the inner joint member.

The torque transmitting balls may include six or eight torque transmitting balls arranged in a circumferential direction. When the eight torque transmitting balls are arranged, it is possible to provide a high-efficient fixed type constant velocity universal joint which is downsized and reduced in weight in comparison with that in the case where the six torque transmitting balls are arranged.

The plurality of track grooves (11) of the outer joint member, each of which constitutes the wedge angle (α) opening to the opening side of the outer joint member under the state in which the operating angle is 0°, and the plurality of track grooves (12) of the outer joint member, each of which constitutes the wedge angle (β) opening to the inner-end side of the outer joint member under the state in which the operating angle is 0°, may be arranged one by one alternately in the circumferential direction, or arranged two by two alternately in the circumferential direction. In any case, in order to reliably reduce generation of the spherical forces, it is desirable to set the numbers of the plurality of track grooves of two types to be equal to each other.

### Advantageous Effects of Invention

As described above, according to the present invention, it is possible to manufacture at low cost the high-efficient fixed type constant velocity universal joint which involves less torque loss. Further, it is possible to provide the fixed type constant velocity universal joint capable of easily forming high operating angles and excellent in strength and durability at the high operating angles.

### Brief Description of Drawings

[Fig. 1] A sectional view (A-A direction in Fig. 2) of a fixed type constant velocity universal joint according to the present invention.
[Fig. 2] A front view illustrating the fixed type constant velocity universal joint viewed from an opening side of an outer joint member.
[Fig. 3] A sectional view (A-A direction in Fig. 2) of the outer joint member.
[Fig. 4] A sectional view (A-A direction in Fig. 2) of an inner joint member.
[Fig. 5a] A sectional view (A-A direction in Fig. 2) of the outer joint member according to a second embodiment.
[Fig. 5b] A sectional view (A-A direction in Fig. 2) of the fixed type constant velocity universal joint according to the second embodiment.
[Fig. 6a] A sectional view (A-A direction in Fig. 2) of the outer joint member according to a third embodiment.
[Fig. 6b] A sectional view (A-A direction in Fig. 2) of the fixed type constant velocity universal joint according to the third embodiment.
[Fig. 7a] A sectional view (A-A direction in Fig. 2) of the outer joint member according to a fourth embodiment.
[Fig. 7b] A sectional view (A-A direction in Fig. 2) of the fixed type constant velocity universal joint according to the fourth embodiment.
[Fig. 8a] A sectional view (A-A direction in Fig. 2) of the outer joint member according to a fifth embodiment.
[Fig. 8b] A sectional view (A-A direction in Fig. 2) of the fixed type constant velocity universal joint according to the fifth embodiment.
[Fig. 9a] A sectional view (A-A direction in Fig. 2) of the outer joint member according to a sixth embodiment.
[Fig. 9b] A sectional view (A-A direction in Fig. 2) of the fixed type constant velocity universal joint according to the sixth embodiment.
[Fig. 10a] A sectional view (A-A direction in Fig. 2) of the outer joint member according to a seventh embodiment.
[Fig. 10b] A sectional view (A-A direction in Fig. 2) of the fixed type constant velocity universal joint according to the seventh embodiment.
[Fig. 11a] A sectional view (A-A direction in Fig. 2) of the outer joint member according to an eighth embodiment.
[Fig. 11b] A sectional view (A-A direction in Fig. 2) of the fixed type constant velocity universal joint according to the eighth embodiment.
[Fig. 12a] A sectional view (A-A direction in Fig. 2) of the outer joint member according to a ninth embodiment.
[Fig. 12b] A sectional view (A-A direction in Fig. 2) of the fixed type constant velocity universal joint according to the ninth embodiment.
[Fig. 13a] A sectional view (A-A direction in Fig. 2) of the outer joint member according to a tenth embodiment.
[Fig. 13b] A sectional view (A-A direction in Fig. 2) of the fixed type constant velocity universal joint according to the tenth embodiment.
[Fig. 14] A sectional view (A-A direction in Fig. 2) of the inner joint member according to the tenth embodiment.
[Fig. 15a] A sectional view (A-A direction in Fig. 2) of the outer joint member according to an eleventh embodiment.
[Fig. 15b] A sectional view (A-A direction in Fig. 2) of the fixed type constant velocity universal joint according to the eleventh embodiment.
[Fig. 16a] A sectional view (A-A direction in Fig. 2) of the outer joint member according to a twelfth embodiment.
[Fig. 16b] A sectional view (A-A direction in Fig. 2) of the fixed type constant velocity universal joint according to the twelfth embodiment.
[Fig. 17] A sectional view of a conventional fixed type constant velocity universal joint.

### Reference Signs List

1 outer joint member
1a mouth portion
1b stem portion
2 inner joint member
3 torque transmitting ball
4 cage
10 inner spherical surface
11 first track groove of outer joint member
11a circular-arc portions
11b central track-groove portion
11c opening-side track-groove portion
11d intermediate track-groove portion
12 second track groove of outer joint member
12a circular-arc portion
12b central track-groove portion
12c opening-side track-groove portion, inner-end-side track-groove portion
12d intermediate track-groove portion
20 outer spherical surface
21 first track groove of inner joint member
22 second track groove of inner joint member
40 outer spherical surface
41 inner spherical surface
Oj joint center
L normal angular range
L' operating-angle range which is larger than normal angular range and has relatively high frequency of use

### Description of Embodiments

In the following, description is made of embodiments of the present invention with reference to figures.

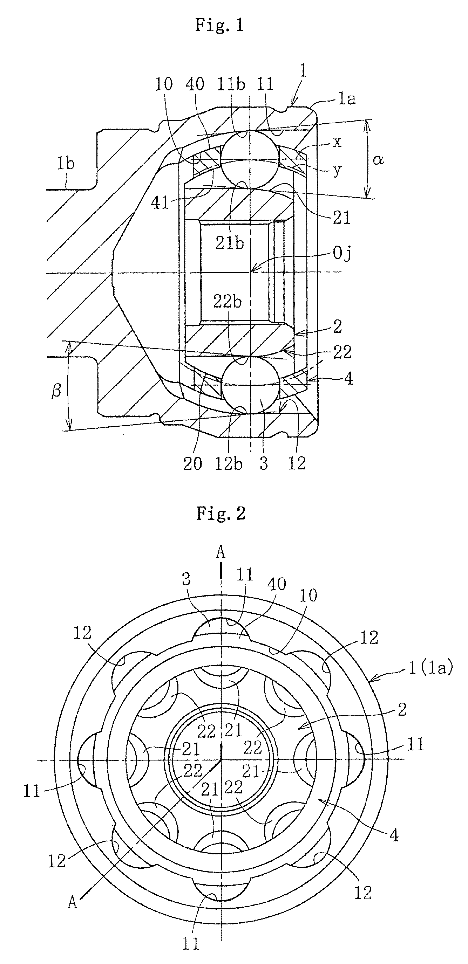

Figs. 1 to 4 illustrate a first embodiment of the present invention. As illustrated in Fig. 1, a fixed type constant velocity universal joint according to the first embodiment includes an outer j oint member 1 having a mouth portion 1a and a stem portion 1b provided integrally with each other, an inner joint member 2 housed in the outer joint member 1, a plurality of torque transmitting balls 3 for transmitting torque between the outer joint member 1 and the inner joint member 2, and a cage 4 for holding the torque transmitting balls 3 at equiangular positions. The mouth portion 1a of the outer joint member 1 has such a form as to be closed at one axial end; specifically, one axial-end side constitutes an inner-end side, and another axial-end side constitutes an opening side. The fixed type constant velocity universal joint is incorporated in an outboard side of a drive shaft for automobiles, and the stem portion 1b of the outer joint member 1 is coupled to a hub (not shown). Further, one end of an intermediate shaft (not shown) is spline-coupled to an inner periphery of the inner joint member 2, and another end of the intermediate shaft is coupled to a plunging type constant velocity universal joint on an inboard side.

An inner spherical surface 10 of the outer joint member 1 is provided with a plurality of track grooves 11 and 12 extending in an axial direction, and an outer spherical surface 20 of the inner joint member 2 are similarly provided with a plurality of track grooves 21 and 22. Ball tracks are formed between the track grooves of the outer joint member 1 and the track grooves of the inner joint member 2 facing each other (between the track grooves 11 and the track grooves 21, and between the track grooves 12 and the track grooves 22). The torque transmitting balls 3 are arranged one by one in the ball tracks. In this embodiment, as illustrated in Fig. 2, a case is illustrated as an example where eight torque transmitting balls 3 are used. The cage 4 includes an outer spherical surface 40 and an inner spherical surface 41 which are partially spherical. Both spherical centers of the outer spherical surface 40 and the inner spherical surface 41 of the cage 4 are positioned on a joint center Oj. The outer spherical surface 40 of the cage 4 spherically fits to the inner spherical surface 10 of the outer joint member 1, and the inner spherical surface 41 of the cage 4 spherically fits to the outer spherical surface 20 of the inner joint member 2.

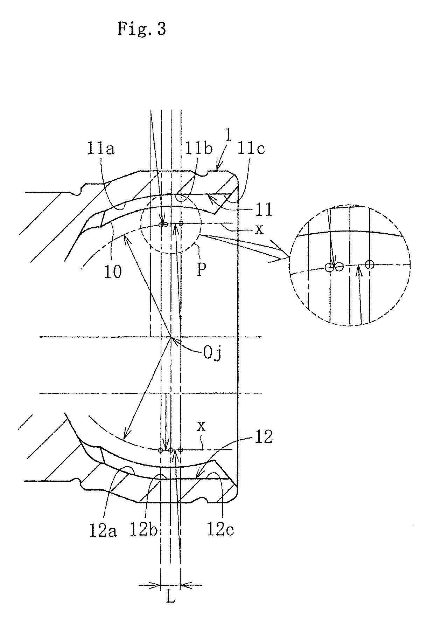

Fig. 3 is a sectional view (sectional view taken along the line A-A of Fig. 2) of the outer joint member 1. The track grooves 11 and 12 of the outer joint member 1 are of two types different from each other in axial sectional shape. First track grooves 11 are of one of the two types, and second track grooves 12 are of another of the two types.

As illustrated in Fig. 3, each of the first track grooves 11 of the outer joint member 1 includes a circular-arc portion 11a, a central track-groove portion 11b, and an opening-side track-groove portion 11c in the stated order from the inner-end side of the outer joint member 1. The circular-arc portion 11a has a circular-arc shape in which a curvature center of a ball-raceway center line x is positioned on the joint center Oj. A part, which corresponds to the opening-side track-groove portion 11c, of the ball-raceway center line x is linear in the axial direction. The central track-groove portion 11b has such an S-shaped form as to smoothly connect the following to each other: an inner-end-side circular arc in which the curvature center of the ball-raceway center line x is positioned on a radially outer side of the first track groove 11 and on the inner-end side relative to the joint center Oj; and an opening-side circular arc in which the curvature center is positioned on a radially inner side of the first track groove 11 (on the axis in the illustration) and on the opening side relative to the joint center Oj. The central track-groove portion 11b is directly and smoothly connected to both the circular-arc portion 11a and the opening-side track-groove portion 11c. None of the circular-arc portion 11a, the central track-groove portion 11b, or the opening-side track-groove portion 11c has an undercut toward the opening side.

Each of the second track grooves 12 of the outer joint member 1 similarly includes a circular-arc portion 12a, a central track-groove portion 12b, and an opening-side track-groove portion 12c in the stated order from the inner-end side of the outer joint member 1. The central track-groove portion 12b is directly and smoothly connected to both the circular-arc portion 12a and the opening-side track-groove portion 12c. The circular-arc portion 12a has a circular-arc shape in which the curvature center of the ball-raceway center line x is positioned on the joint center Oj. A part, which corresponds to the opening-side track-groove portion 12c, of the ball-raceway center line x is linear and extends in the axial direction. The central track-groove portion 12b has such an S-shaped form as to smoothly connect the following to each other: an inner-end-side circular arc in which the curvature center of the ball-raceway center line x is at such a position on a radially inner side of the second track groove 12 as to be offset to the inner-end side relative to the joint center Oj and offset from the axis into a radially outer direction; and an opening-side circular arc in which the curvature center of the ball-raceway center line x is positioned on a radially outer side of the second track groove 12 and on the opening side relative to the joint center Oj. Each of the circular-arc portions 12a and the opening-side track-groove portion 12c does not have an undercut toward the opening side. Meanwhile, the central track-groove portion 12b slightly has an undercut toward the opening side.

As illustrated in Fig. 2, the first track grooves 11 and the second track grooves 12 of the outer joint member 1 are arranged one by one alternately in a circumferential direction. Alternatively, although not shown, the track grooves may be arranged two by two alternately in the circumferential direction. In any case, in order to avoid generation of a spherical force as much as possible, it is preferred to equalize, in the joint as a whole, a total number of the first track grooves 11 and a total number of the second track grooves 12 to each other.

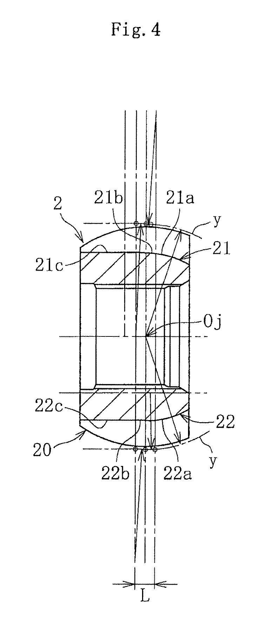

Fig. 4 is a sectional view (sectional view taken along the line A-A of Fig. 2) of the inner joint member 2. The track grooves 21 and 22 of the inner joint member 2 are of two types different from each other in axial sectional shape. The first track grooves 21 which are of one of the two types are arranged so as to face the first track grooves 11 of the outer joint member 1, and the second track grooves 22 which are of another of the two types are arranged so as to face the second track grooves 12 of the outer joint member 1. The first track grooves 21 and the second track grooves 22 of the inner joint member 2 have such shapes as to be mirror-image symmetrical with the track grooves 11 and 12 of the outer joint member 1 as respective counterparts thereof with respect to a joint-center plane (radial plane passing the joint center Oj). That is, each of the first track grooves 21 of the inner joint member 2 is provided with an inner-end-side track-groove portion 21c, a central track-groove portion 21b, and a circular-arc portion 21a in the stated order from the inner-end side of the outer joint member 1. Similarly, each of the second track grooves 22 of the inner joint member 2 is provided with an inner-end-side track-groove portion 22c, a central track-groove portion 22b, and a circular-arc portion 22a in the stated order from the inner-end side of the outer joint member 1.

In each of the circular-arc portions 21a and 22a of the inner joint member 2, a curvature center of a ball-raceway center line y is positioned on the joint center Oj . The ball-raceway center line y has two curvature centers respectively at such parts as to corresponds respectively to the central track-groove portion 21b of the first track groove 21 and the central track-groove portion 22b of the second track groove 22. The central track-groove portion 21b of the first track groove 21 has such an S-shaped form as to smoothly connect the following to each other: an inner-end-side circular arc in which the curvature center of the ball-raceway center line y is positioned on a radially inner side of the first track groove 21 of the inner joint member 2 (on the axis in the illustration) and on the inner-end side of the outer joint member relative to the joint center Oj; and an opening-side circular arc in which the curvature center of the ball-raceway center line y is positioned on a radially outer side of the first track groove 21 and on an opening-side of the outer joint member relative to the joint center Oj . The central track-groove portion 22b of the second track groove 22 has such an S-shaped form as to smoothly connect the following to each other: an inner-end-side circular arc in which the curvature center of the ball-raceway center line y is positioned on a radially outer side of the second track groove 22 and on the inner-end side of the outer joint member relative to the joint center Oj; and an opening-side circular arc in which the curvature center of the ball-raceway center line y is at such a position on a radially inner side of the second track groove 22 as to be offset to an opening-side of the outer joint member relative to the joint center Oj and offset from the axis into the radially outer direction.

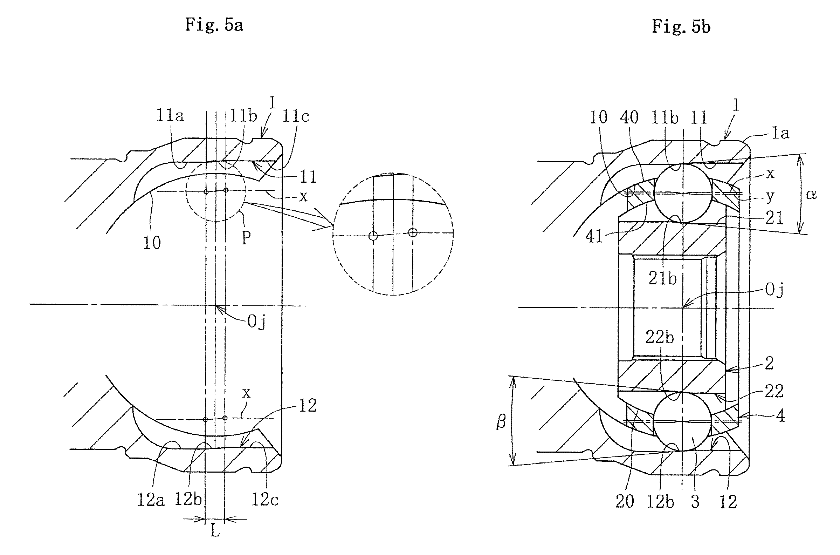

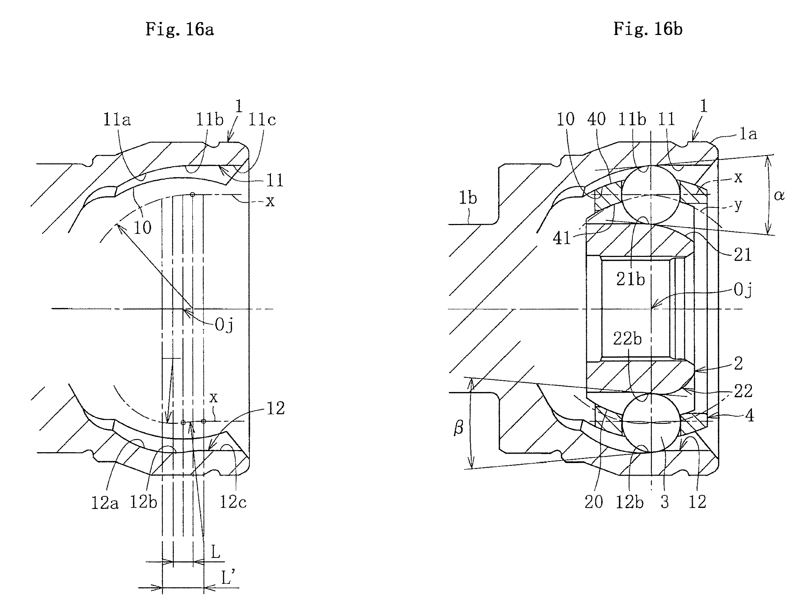

Note that, in Figs. 3 and 4, circle marks drawn on the ball-raceway center line x in each of the track grooves 11 and 12 of the outer joint member 1 and the ball-raceway center line y in each of the track grooves 21 and 22 of the inner joint member 2 each represent an inflection point between adjacent circular arcs, a boundary point between a circular arc and a straight line, or a boundary point between straight lines. Regions on both sides of those inflection point and boundary points are made to be smoothly continuous with each other. When it is difficult to make the regions smoothly continuous with each other, the regions may be connected with a small round (hereinafter, the same applies to from Figs. 5a and 5b to Figs. 16a and 16b).

Reference symbol L in Figs. 3 and 4 represents a normal angular range corresponding to a range in which, when the constant velocity universal joint forms a normal angle, each of the torque transmitting balls 3 comes into contact with the track grooves 11 and 12 of the outer joint member 1 and the track grooves 21 and 22 of the inner joint member 2. In the track grooves 11 and 12 of the outer joint member 1 and the track grooves 21 and 22 of the inner joint member 2, parts corresponding to the normal angular range L constitute the central track-groove portions 11b, 12b, 21b, and 22b.

When the inner joint member 2, the torque transmitting balls 3, and the cage 4 are incorporated in the outer joint member 1, as illustrated in Fig. 1, the ball tracks for respectively housing the torque transmitting balls 3 are formed between the first track grooves 11 of the outer joint member 1 and the first track grooves 21 of the inner joint member 2 and between the second track grooves 12 of the outer joint member 1 and the second track grooves 22 of the inner joint member 2. Under a state in which an operating angle is 0°, the central track-groove portion 11b of each of the track grooves 11 of the outer joint member 1 and the central track-groove portion 21b of each of the first track grooves 21 of the inner joint member 2 forms such a wedge angle α as to open to the opening side of the outer joint member 1. Further, the central track-groove portion 12b of each of the second track grooves 12 of the outer joint member 1 and the central track-groove portion 22b of each of the second track grooves 22 of the inner joint member 2 forms such a wedge angle β as to open to the inner-end side of the outer joint member 1.

When the fixed type constant velocity universal joint is incorporated in a front drive shaft for automobiles to form a normal angle, there are obtained such wedge angles as to open, in the axial direction, to the same sides as the respective wedge angles α and β at the operating angle of 0°. The forces which act respectively from the track grooves 11 and 12 of the outer joint member 1 and from the track grooves 21 and 22 of the inner joint member 2 to the torque transmitting balls 3 are counterbalanced each other by the wedge angle. Thus, it is possible to reduce spherical forces which act respectively between the cage 4 and the outer joint member 1 and between the cage 4 and the inner joint member 2. With this, in the normal angular range L, it is possible to suppress loss of torque-to-be-transmitted, and hence to achieve higher efficiency of the joint.

Further, in the fixed type constant velocity universal joint, the central track-groove portions 11b and 21b which form the wedge angle α and the central track-groove portions 12b and 22b which form the wedge angle β are formed only in a certain range including the joint center Oj in the axial direction (normal angular range L), the wedge angles α and β being opposite to each other under the state in which the operating angle of the constant velocity universal joint is 0°. In each of the opening-side track-groove portions 11c and 12c connected respectively to the central track-groove portions 11b and 12b of the outer joint member 1, and the inner-end-side track grooves portion 21c and 22c connected respectively to the central track-groove portions 21b and 22b of the inner joint member 2, the ball-raceway center lines x and y are linear in the axial direction. Simultaneously, each of the track-groove portions has such a shape as to be free from an undercut. Although undercuts are formed in the central track-groove portion 12b of each of the second track grooves 12 of the outer joint member 1 and the central track-groove portion 22b of each of the second track grooves 22 of the inner joint member 2, amounts of the undercuts are so minute as not to have an influence on forgeability. Accordingly, the outer joint member 1 and the inner joint member 2 can be easily forged, and hence near-net shaping at the time of forging can be achieved.

Further, in each of the circular-arc portions 11a and 12a formed on the inner-end side of the track grooves 11 and 12 of the outer joint member 1, the curvature center of the ball-raceway center line x is positioned on the joint center Oj. Thus, in comparison with a case where the curvature centers of the ball-raceway center line are positioned on the opening side relative to the joint center Oj, a track depth at an innermost-end portion of each of the track grooves 11 and 12 can be increased. Accordingly, allowable load torque at high operating angles can be increased.

Still further, on the opening side of the track grooves 11 and 12 of the outer joint member 1 and on the inner-end side of the track grooves 21 and 22 of the inner joint member 2, the opening-side track-groove portions 11c and 12c and the inner-end-side track grooves 21c and 22c are respectively formed, which have the same form as those in a conventional undercut-free joint (UJ). Thus, excessive load does not act on the cage 4 even at high operating angles. Therefore, the cage 4 is downsized, with the result that the joint can be downsized as a whole.

In the following, description is made of other embodiments with reference to from Figs. 5a and 5b to Figs. 16a and 16b.

Figs. 5a and 5b illustrate a second embodiment of the present invention. In the second embodiment, each of the opening-side track-groove portion 11c of the first track groove 11 and the opening-side track-groove portion 12c of the second track groove 12 of the outer joint member 1 has the same form as that of the first embodiment illustrated in Fig. 1. Thus, each of the ball-raceway center lines x is linear in the axial direction.

Meanwhile, unlike the first embodiment, the ball-raceway center line x in each of the central track-groove portion 11b of the first track groove 11 and the central track-groove portion 12b of the second track groove 12 is formed in an inclined linear shape. The central track groove 11b of the first track groove 11 is radially larger toward the opening side, and the central track groove 12b of the second track groove 12 is radially smaller toward the opening side. Further, in each of the region 11a on the inner-end side relative to the central track-groove portion 11b of the first track groove 11 and the region 12a on the inner-end side relative to the central track-groove portion 12b of the second track groove 12, the ball-raceway center line x is formed to be linear in the axial direction. Both the central track grooves 11b and 12b are connected directly to the inner-end-side straight regions 11a and 12a and the opening-side track-groove portions 11c and 12c. The track grooves 21 and 22 of the inner joint member 2 are formed in such shapes as to be mirror-image symmetrical with the track grooves 11 and 12 of the outer joint member 1 as respective counterparts thereof with respect to the joint-center plane (the same applies to the following embodiments).

In the structure described above, under the state in which the operating angle is 0°, the wedge angle α opening to the opening side is formed of the central track-groove portion 11b of the first track groove 11 of the outer joint member 1 and the central track-groove portion 21b of the first track groove 21 of the inner joint member 2, and the wedge angle β opening to the inner-end side is formed of the central track-groove portion 12b of the second track groove 12 of the outer joint member 1 and the central track-groove portion 22b of the second track groove 22 of the inner joint member 2. In the normal angular range L, in each of the ball tracks, the wedge angles α and open to the same side in the axial direction.

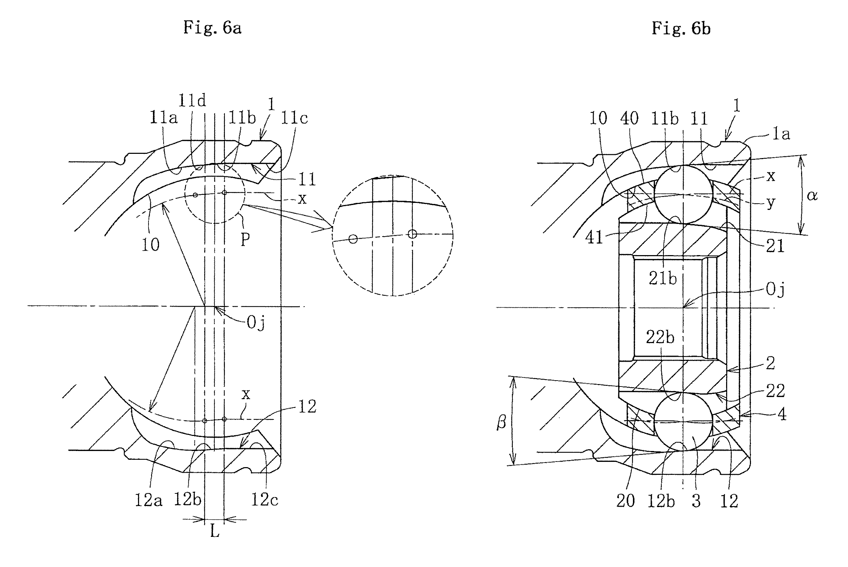

Figs. 6a and 6b illustrate a third embodiment of the present invention. In the third embodiment, each of the central track-groove portions 11b and 12b and the opening-side track-groove portions 11c and 12c of the first track groove 11 and the second track groove 12 of the outer joint member 1 has the same form as that of the second embodiment illustrated in Figs. 5a and 5b.

Unlike the second embodiment, on the inner-end side relative to the central track-groove portion 11b of the first track groove 11 and on the inner-end side relative to the central track-groove portion 12b of the second track groove 12 of the outer joint member 1, the circular-arc portions 11a and 12a are formed. The curvature center of the ball-raceway center line x in each of the circular-arc portions 11a and 12a is provided on the joint center Oj or on the joint-inner-end side relative to the joint center Oj. In Figs. 6a and 6b, as an example, the curvature center of the ball-raceway center line x in the circular-arc portion 11a formed in the first track groove 11 is provided on the inner-end side relative to the joint center Oj on the axis, and the curvature center of the ball-raceway center line x in the circular-arc portion 12a formed in the second track groove 12 is provided on the inner-end side relative to the joint center Oj on the axis. In the first track groove 11, in order to smoothly connect the circular-arc portion 11a and the central track-groove portion 11b to each other, an intermediate track-groove portion 11d having such a form (inclined linear shape) as to be extended from the central track-groove portion 11b is interposed therebetween. In the second track groove 12, the circular-arc portion 12a is directly and smoothly connected to the central track-groove portion 12b.

In the structure described above, under the state in which the operating angle is 0°, the wedge angle α opening to the opening side is formed of the central track-groove portion 11b of the first track groove 11 of the outer joint member 1 and the central track-groove portion 21b of the first track groove 21 of the inner joint member 2, and the wedge angle opening to the inner-end side of the outer joint member 1 is formed of the central track-groove portion 12b of the second track groove 12 of the outer joint member 1 and the central track-groove portion 22b of the second track groove 22 of the inner joint member 2. In the normal angular range L, the wedge angles α and β of each of the ball tracks open to the same side in the axial direction.

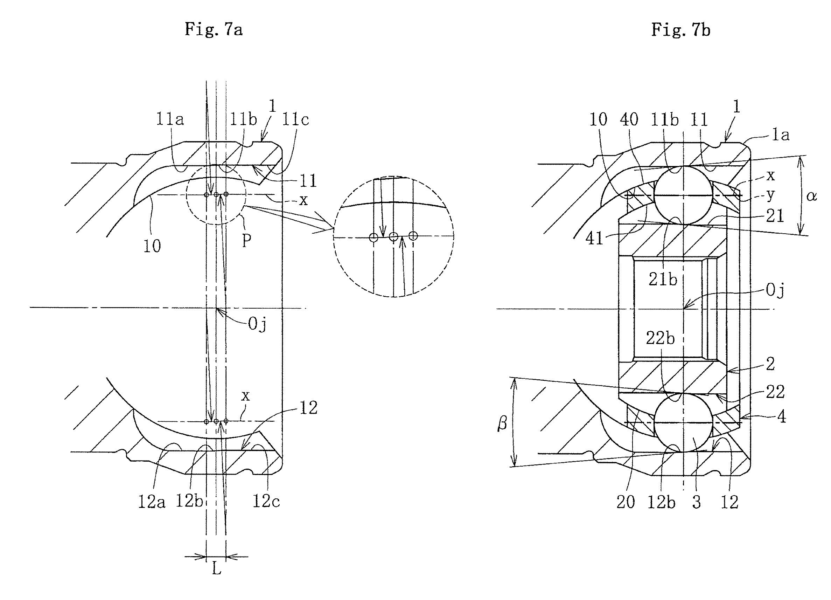

Figs. 7a and 7b illustrate a fourth embodiment of the present invention. In the fourth embodiment, similarly to those in the first embodiment, each of the central track-groove portion 11b of the first track groove 11 and the central track-groove portion 12b of the second track groove 12 of the outer joint member 1 has such an S-shaped form that each of the ball-raceway center lines x has two curvature centers. In the circular arc on the opening side of the central track-groove portion 11b of the first track groove 11, the curvature center of the ball-raceway center line x is positioned on the opening side relative to the joint center Oj and on the axis. In the circular arc on the inner-end side of the central track-groove portion 11b, the curvature center of the ball-raceway center line x is positioned on the inner-end side relative to the joint center Oj and on the radially outer side of the first track groove 11. In the circular arc on the inner-end side of the central track-groove portion 12b of the second track groove 12, the curvature center of the ball-raceway center line x is positioned on the inner-end side relative to the joint center Oj and on the axis. In the circular arc on the opening-end side of the central track-groove portion 12b, the curvature center of the ball-raceway center line x is positioned on the opening side relative to the joint center Oj and on the radially outer side relative to the second track groove 12. Theopening-sidetrack-grooveportion 11c of the first track groove 11 and the opening-side track-groove portion 12c of the second track groove 12 each have the same form as that in the first embodiment illustrated in Fig. 1, and hence are directly and smoothly connected respectively to the circular arcs on the opening side of the central track-groove portions 11b and 12b.

Meanwhile, unlike the first embodiment, in each of the regions 11a and 12a on the inner-end side relative to the central track-groove portion 11b of the first track groove 11 and on the inner-end side of the central track-groove portion 12b of the second track groove 12, respectively, the ball-raceway center line x is formed in a straight line in the axial direction. The inner-end side regions 11a and 12a are directly and smoothly connected to the circular arcs on the inner-end side of the central track-groove portions 11b and 12b.

In the structure described above, under the state in which the operating angle is 0°, the wedge angle α opening to the opening side of the outer joint member 1 is formed of the central track-groove portion 11b of the first track groove 11 of the outer joint member 1 and the central track-groove portion 21b of the first track groove 21 of the inner joint member 2, and the wedge angle β opening to the inner-end side of the outer joint member 1 is formed of the central track-groove portion 12b of the second track groove 12 of the outer joint member 1 and the central track-groove portion 22b of the second track groove 22 of the inner joint member 2.

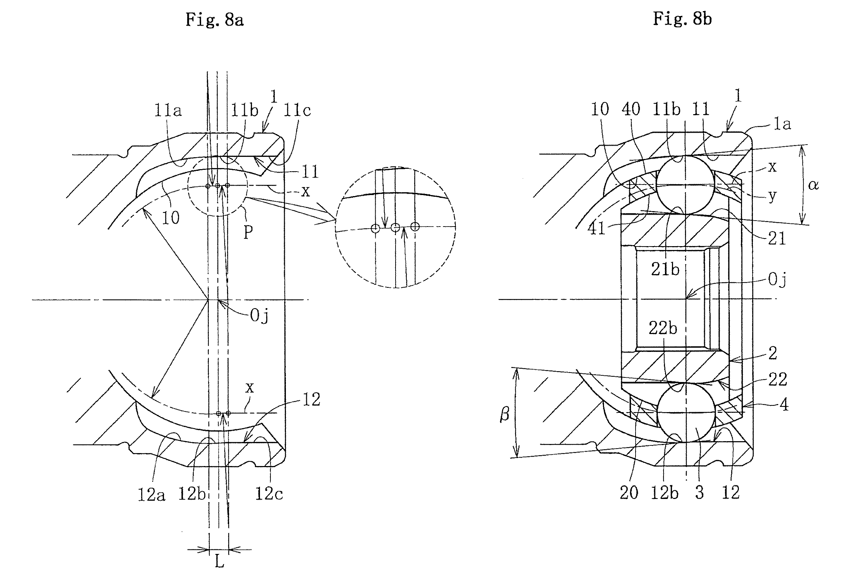

Figs. 8a and 8b illustrate a fifth embodiment of the present invention. In the fifth embodiment, similarly to those in the first embodiment, each of the central track-groove portion 11b of the first track groove 11 and the central track-groove portion 12b of the second track groove 12 of the outer joint member 1 has such an S-shaped form that each of the ball-raceway center lines has two curvature centers. In the circular arc on the inner-end side of the central track-groove portion 11b of the first track groove 11, the curvature center of the ball-raceway center line x is positioned on the inner-end side relative to the joint center Oj and on the radially outer side of the first track groove 11. In the circular arc on the opening side thereof, the curvature center of the ball-raceway center line x is positioned on the opening side relative to the joint center Oj and on the axis. In the circular arc on the inner-end side of the central track-groove portion 12b of the second track groove 12, the curvature center of the ball-raceway center line x is positioned on the inner-end side relative to the joint center Oj and on the axis. In the circular arc on the opening side thereof, the curvature center of the ball-raceway center line x is positioned on the opening side relative to the joint center Oj and on the radially outer side relative to the second track groove 12. Each of the opening-side track-groove portion 11c of the first track groove 11 and the opening-side track-groove portion 12c of the second track groove 12 has the same form as that in the first embodiment.

Meanwhile, unlike the first embodiment, the curvature center of the ball-raceway center line x in each of the circular-arc portion 11a of the first track groove 11 and the circular-arc portion 12a of the second track groove 12 is positioned on the inner-end side relative to the joint center Oj. In Figs. 8a and 8b, as an example, although being arranged at the same positions on the axis, both the curvature centers may be arranged at different positions as long as being on the inner-end side relative to the joint center Oj. Both the central track groove 11b of the first track groove 11 and the central track groove 12b of the second track groove 12 are directly and smoothly connected respectively to the circular-arc portions 11a and 12a on the inner-end side and the opening-side track-groove portions 11c and 12c. In the circular arc on the inner-end side, relative to the joint center Oj, of the central track-groove portion 12b of the second track groove 12, the curvature center of the ball-raceway center line x is at the same position as that of the curvature center of the ball-raceway center line in the circular-arc portion 12a.

In the structure described above, under the state in which the operating angle is 0°, the wedge angle α opening to the opening side of the outer joint member 1 is formed of the central track-groove portion 11b of the first track groove 11 of the outer joint member 1 and the central track-groove portion 21b of the first track groove 21 of the inner joint member 2, and the wedge angle β opening to the inner-end side of the outer joint member 1 is formed of the central track-groove portion 12b of the second track groove 12 of the outer joint member 1 and the central track-groove portion 22b of the second track groove 22 of the inner joint member 2.

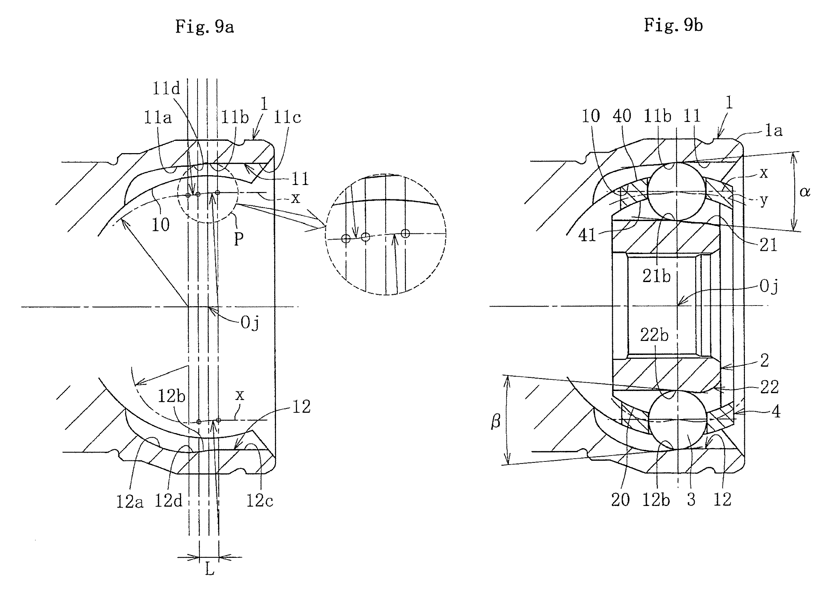

Figs. 9a and 9b illustrate a sixth embodiment of the present invention. In the sixth embodiment, the central track-groove portion 11b of the first track groove 11 and the central track-groove portion 12b of the second track groove of the outer joint member 1 are formed as a single circular arc in which the ball-raceway center line x has one curvature center in the normal angular range L. The opening-side track-groove portion 11c of the first track groove 11 of the outer joint member 1 and the opening-side track-groove portion 12c of the second track groove 12 each have the same form as that in the first embodiment, and hence are directly and smoothly connected respectively to the central track-groove portions 11b and 12b.

In the central track-groove portion 11b of the first track groove 11, the curvature center of the ball-raceway center line x is positioned on the opening side relative to the joint center Oj and on the axis. In the central track-groove portion 12b of the second track groove 12, the curvature center of the ball-raceway center line x is positioned on the opening side relative to the joint center Oj and on the radially outer side relative to the second track groove 12. Further, the curvature center of the ball-raceway center line x in the circular-arc portion 11a of the first track groove 11 is positioned on the inner-end side relative to the joint center Oj and on the axis. In order to smoothly connect the circular-arc portion 11a and the central track-groove portion 11b to each other, the intermediate track-groove portion 11d is formed therebetween in which the curvature center of the ball-raceway center line x is positioned on the inner-end side relative to the joint center Oj and on the radially outer side of the first track groove 11. Both the intermediate track-groove portion 11d and the central track-groove portion 11b do not have an undercut toward the opening side of the outer joint member 1. In the circular-arc portion 12a of the second track groove 12, the curvature center of the ball-raceway center line x is at such a position on the inner-end side relative to the joint center Oj as to be offset to the radially inner side of the second track groove 12 and offset from the axis into the radially outer direction. The second track groove 12 includes an intermediate track-groove portion 12d formed on the inner-end side relative to the normal angular range L so that the circular-arc portion 12a and the central track-groove portion 12b are smoothly connected to each other. The curvature center of the ball-raceway center line x in the intermediate track-groove portion 12d corresponds to the curvature center of the ball-raceway center line x in the circular-arc portion 12a. Each of the intermediate track-groove portion 12d and the central track-groove portion 12b of the second track groove 12 is provided with an undercut having such an amount as not to have an influence on forgeability.

In the structure described above, under the state in which the operating angle is 0°, the wedge angle α opening to the opening side of the outer joint member 1 is formed of the central track-groove portion 11b of the first track groove 11 of the outer joint member 1 and the central track-groove portion 21b of the first track groove 21 of the inner joint member 2, and the wedge angle β opening to the inner-end side of the outer joint member 1 is formed of the central track-groove portion 12b of the second track groove 12 of the outer joint member 1 and the central track-groove portion 22b of the second track groove 22 of the inner joint member 2.

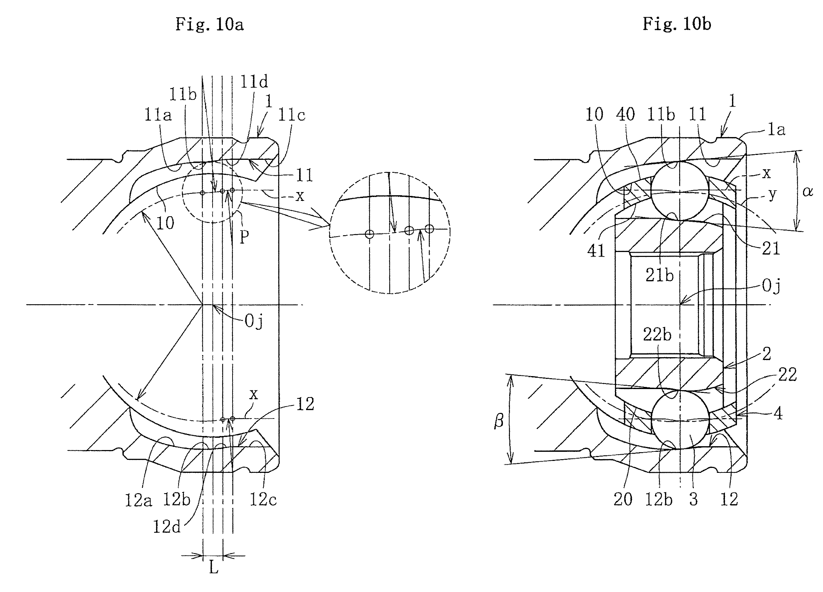

Figs. 10a and 10b illustrate a seventh embodiment of the present invention. In the seventh embodiment, similarly to the sixth embodiment, the central track-groove portion 11b of the first track groove 11 and the central track-groove portion 12b of the second track groove 12 are formed as a single circular arc in which the ball-raceway center line has one curvature center in the normal angular range. Each of the opening-side track-groove portion 11c of the first track groove 11 and the opening-side track-groove portion 12c of the second track groove 12 has the same form as that in the first embodiment. In the sixth embodiment illustrated in Figs. 9a and 9b, the central track-groove portions 11b and 12b are directly connected to the opening-side track-groove portions 11c and 12c. Meanwhile, in the seventh embodiment illustrated in Figs 10a and 10b, the central track-groove portions 11b and 12b and the opening-side track-groove portions 11c and 12c are smoothly connected to each other through intermediation of the intermediate track-groove portions 11d and 12d respectively interposed therebetween. In the intermediate track-groove portion 11d of the first track groove 11, the curvature center of the ball-raceway center line x is at such a position on the opening side relative to the joint center Oj as to be offset to the radially inner side of the first track groove 11 and offset to the radially outer side relative to the axis. In the intermediate track-groove portion 12d of the second track groove 12, the curvature center of the ball-raceway center line x is positioned on the opening side relative to the joint center and on the radially outer side of the first track groove 11.

In each of the circular-arc portion 11a of the first track groove 11 of the outer joint member 1 and the circular-arc portion 12a of the second track groove 12 of the outer joint member 1, the curvature center of the ball-raceway center line x is positioned on the inner-end side relative to the joint center Oj. In the illustration, although the curvature centers of the ball-raceway center line x in the circular-arc portions 11a and 12a are provided at the same position on the axis, those curvature centers may be arranged at different positions on the inner-end side relative to the joint center Oj. In the central track-groove portion 11b of the first track groove 11, the curvature center of the ball-raceway center line x is positioned on the inner-end side relative to the joint center Of and on the radially outer side of the first track groove 11, and hence the central track-groove portion 11b is directly and smoothly connected to the circular-arc portion 11a. In the central track-groove portion 12b of the second track groove 12, the curvature center of the ball-raceway center line x is at the same position as that of the ball-raceway center line x in the circular-arc portion 12a.

In the structure described above, under the state in which the operating angle is 0°, the wedge angle α opening to the opening side of the outer joint member is formed of the central track-groove portion 11b of the first track groove 11 of the outer joint member 1 and the central track-groove portion 21b of the first track groove 21 of the inner joint member 2, and the wedge angle β opening to the inner-end side of the outer joint member 1 is formed of the central track-groove portion 12b of the second track groove 12 of the outer joint member 1 and the central track-groove portion 22b of the second track groove 22 of the inner joint member 2.

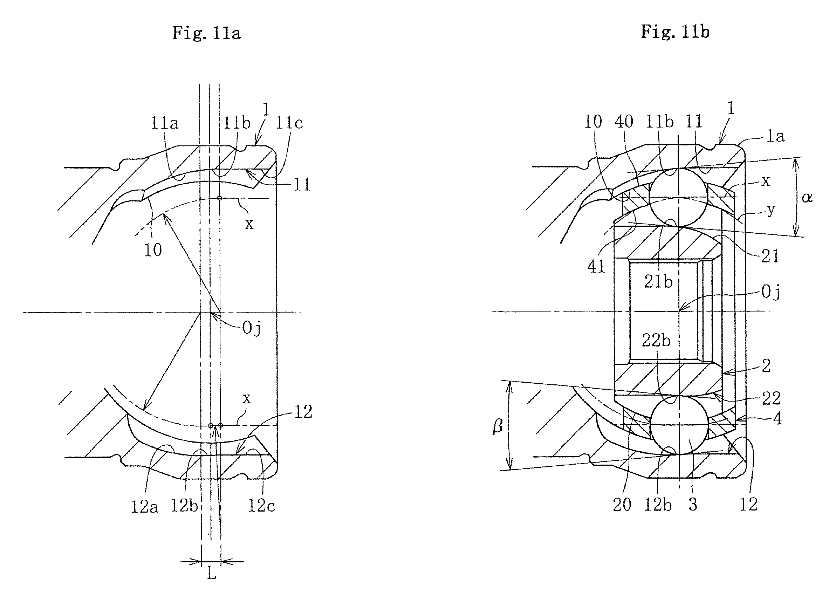

Figs. 11a and 11b illustrate an eighth embodiment of the present invention. In the eighth embodiment, the central track-groove portion 11b of the first track groove 11 of the outer joint member 1 is formed as a single circular arc in which the ball-raceway center line x has one curvature center. Meanwhile, the central track-groove portion 12b of the second track groove 12 of the outer joint member 1 is formed in such an S-shape that the ball-raceway center line x has two curvature center. The opening-side track-groove portion 11c of the first track groove 11 and the opening-side track-groove portion 12c of the second track groove 12 each have the same form as that in the first embodiment, and hence are directly and smoothly connected respectively to the central track-groove portions 11b and 12b.

The ball-raceway center line x in the central track-groove portion 11b of the first track groove 11 is formed as a circular arc having a curvature center at the same position as that of the curvature center of the ball-raceway center line x in the circular-arc portion 11a. The curvature center is positioned on the opening side relative to the joint center Oj and on the axis. In the central track-groove portion 12b of the second track groove 12, a region on the opening side relative to the joint center Oj is formed as a circular arc in which the curvature center of the ball-raceway center line x is positioned on the opening side relative to the joint center Oj and on the radially outer side of the second track groove 12, and a region on the inner-end side relative to the joint center Oj is formed as a circular arc in which the curvature center of the ball-raceway center line x is at the same position as that of the circular-arc portion 12a. The curvature center of the ball-raceway center line x in the region on the inner-end side of the central track-groove portion 12b and in the circular-arc portion 12a is positioned on the inner-end side relative to the joint center Oj and on the axis.

In the structure described above, under the state in which the operating angle is 0°, the wedge angle α opening to the opening side of the outer joint member 1 is formed of the central track-groove portion 11b of the first track groove 11 of the outer joint member 1 and the central track-groove portion 21b of the first track groove 21 of the inner joint member 2, and the wedge angle β opening to the inner-end side of the outer joint member is formed of the central track-groove portion 12b of the second track groove 12 of the outer joint member 1 and the central track-groove portion 22b of the second track groove 22 of the inner joint member 2.

Note that, the first track groove 11 of the outer joint member 1 in the eighth embodiment has the same track-groove form as that of an outer joint member of a constant velocity universal joint referredtoas an undercut-free joint (UJ). In such a structure, the number of inflection points is smaller than those in the first to seventh embodiments, and hence processing cost of the outer joint member 1 and the inner joint member 2 can be reduced.

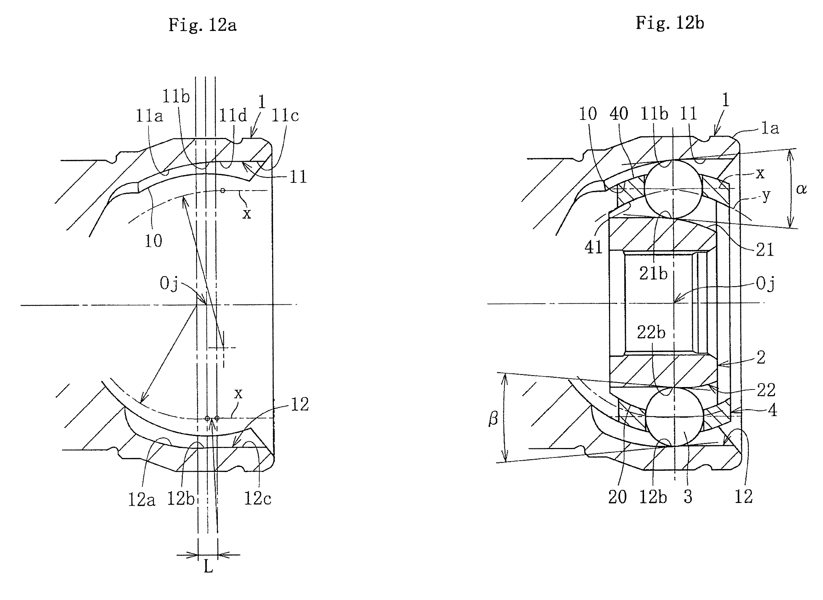

Figs. 12a and 12b illustrate a ninth embodiment of the present invention. In the ninth embodiment, unlike the eighth embodiment illustrated in Figs. 11a and 11b, the curvature center of the ball-raceway center line x in each of the circular-arc portion 11a and the central track-groove portion 11b of the first track groove 11 of the outer joint member 1 is moved to such a position in the region on the opening side relative to the joint center Oj as to be offset beyond and from the axis into the radially outer direction (curvature radius is increased). The second track groove 12 has the same structure as that in the eighth embodiment illustrated in Figs. 11a and 11b.

In the structure described above, under the state in which the operating angle is 0°, the wedge angle α opening to the opening side of the outer joint member is formed of the central track-groove portion 11b of the first track groove 11 of the outer joint member 1 and the central track-groove portion 21b of the first track groove 21 of the inner joint member 2, and the wedge angle β opening to the inner-end side of the outer joint member 2 is formed of the central track-groove portion 12b of the second track groove 12 of the outer joint member 1 and the central track-groove portion 22b of the second track groove 22 of the inner joint member 2.

With this structure, the track depth on the inner-end side of the first track groove 11 of the outer joint member 1 is larger than that in the eighth embodiment. Thus, allowable load torque on the inner-end side can be increased.

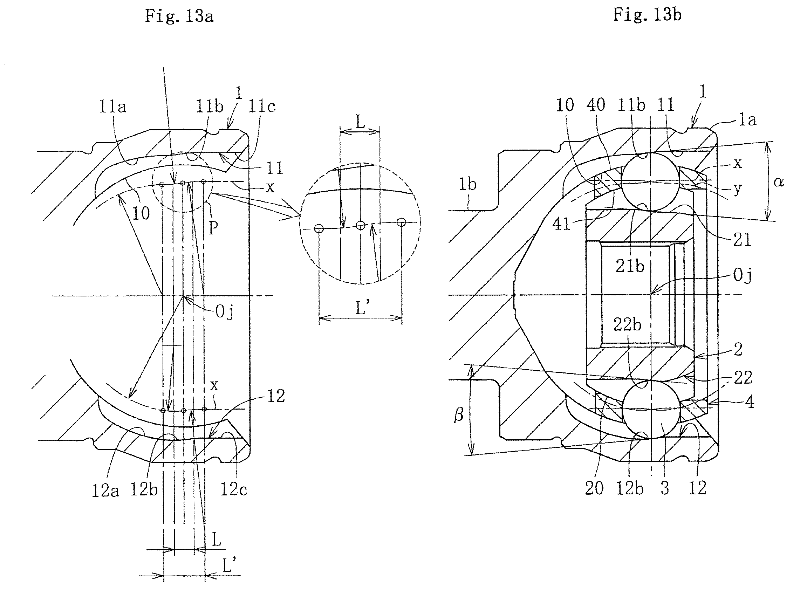

Figs. 13a and 13b illustrate a tenth embodiment of the present invention. Each of the first track grooves 11 of the outer joint member 1 includes the circular-arc portion 11a, the central track-groove portion 11b, and the opening-side track-groove portion 11c in the stated order from the inner-end side of the outer joint member 1. The circular-arc portion 11a has a circular-arc shape in which the curvature center of the ball-raceway center line x is positioned on the inner-end side relative to the joint center Oj and on the axis. A part, which corresponds to the opening-side track-groove portion 11c, of the ball-raceway center line x is linear in the axial direction. The central track-groove portion 11b has such an S-shaped form as to smoothly connect the following to each other: an inner-end-side circular arc in which the curvature center of the ball-raceway center line x is positioned on a radially outer side of the first track groove 11 and on the inner-end side relative to the joint center Oj; and an opening-side circular arc in which the curvature center is positioned on a radially inner side of the first track groove 11 (on the axis in the illustration) and on the opening side relative to the joint center Oj. The central track-groove portion 11b is smoothly connected to both the circular-arc portion 11a and the opening-side track-groove portion 11c. None of the circular-arc portion 11a, the central track-groove portion 11b, or the opening-side track-groove portion 11c has an undercut toward the opening side.

Each of the second track grooves 12 of the outer joint member 1 similarly includes the circular-arc portion 12a, the central track-groove portion 12b, and an opening-side track-groove portion 12c in the stated order from the inner-end side of the outer joint member 1 . The central track-groove portion 12b is smoothly connected to both the circular-arc portion 12a and the opening-side track-groove portion 12c. The circular-arc portion 12a has a circular-arc shape in which the curvature center of the ball-raceway center line x is positioned on the joint center Oj. A part, which corresponds to the opening-side track-groove portion 12c, of the ball-raceway center line x is linear and extends in the axial direction. The central track-groove portion 12b has such an S-shaped form as to smoothly connect the following to each other: an inner-end-side circular arc in which the curvature center of the ball-raceway center line x is at such a position on a radially inner side of the second track groove 12 as to be offset to the inner-end side relative to the joint center Oj and offset from the axis into a radially outer direction; and an opening-side circular arc in which the curvature center of the ball-raceway center line x is positioned on a radially outer side of the second track groove 12 and on the opening side relative to the joint center Oj. Each of the circular-arc portion 12a and the opening-side track-groove portion 12c does not have an undercut toward the opening side. Meanwhile, the central track-groove portion 12b slightly has an undercut toward the opening side.

As illustrated in Fig. 2, the first track grooves 11 and the second track grooves 12 of the outer joint member 1 are arranged one by one alternately in a circumferential direction. Alternatively, although not shown, the track grooves may be arranged two by two alternately in the circumferential direction. In any case, in order to avoid generation of a spherical force as much as possible, it is preferred to equalize, in the joint as a whole, a total number of the first track grooves 11 and a total number of the second track grooves 12 to each other.

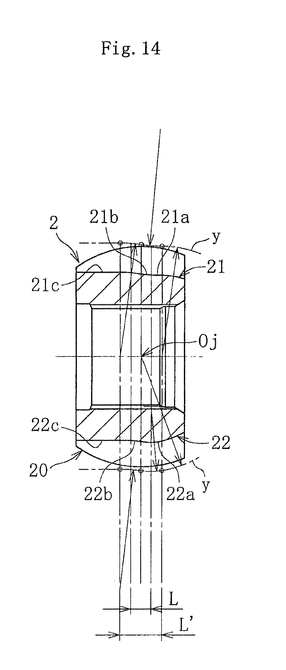

Fig. 14 is a sectional view (sectional view taken along the line A-A of Fig. 2) of the inner joint member 2. The track grooves 21 and 22 of the inner joint member 2 are of two types different from each other in axial sectional shape. The first track grooves 21 which are of one of the two types are arranged so as to face the first track grooves 11 of the outer joint member 1, and the second track grooves 22 which are of another of the two types are arranged so as to face the second track grooves 12 of the outer joint member 1. The first track grooves 21 and the second track grooves 22 of the inner joint member 2 have such shapes as to be mirror-image symmetrical with the track grooves 11 and 12 of the outer joint member 1 as respective counterparts thereof with respect to a joint-center plane (radial plane passing the joint center Oj). That is, each of the first track grooves 21 of the inner joint member 2 is provided with the inner-end-side track-groove portion 21c, the central track-groove portion 21b, and the circular-arc portion 21a in the stated order from the inner-end side of the outer joint member 1. Similarly, each of the second track grooves 22 of the inner joint member 2 is provided with the inner-end-side track-groove portion 22c, the central track-groove portion 22b, and the circular-arc portion 22a in the stated order from the inner-end side of the outer joint member 1.

In the circular-arc portion 21a of the inner joint member 2, the curvature center of the ball-raceway center line y is positioned on the axis and on the opening side of the outer joint member relative to the joint center Oj. In the circular-arc portion 22a, the curvature center of the ball-raceway center line y is positioned on the joint center Oj. The ball-raceway center line y has two curvature centers respectively at such parts as to correspond respectively to the central track-groove portion 21b of the first track groove 21 and the central track-groove portion 22b of the second track groove 22. The central track-groove portion 21b of the first track groove 21 has such an S-shaped form as to smoothly connect the following to each other: an inner-end-side circular arc in which the curvature center of the ball-raceway center line y is positioned on a radially inner side of the first track groove 21 of the inner joint member 2 (on the axis in the illustration) and on the inner-end side of the outer joint member relative to the joint center Oj; and an opening-side circular arc in which the curvature center of the ball-raceway center line y is positioned on a radially outer side of the first track groove 21 and on an opening-side of the outer joint member relative to the joint center Oj. The central track-groove portion 22b of the second track groove 22 has such an S-shaped form as to smoothly connect the following to each other: an inner-end-side circular arc in which the curvature center of the ball-raceway center line y is positioned on a radially outer side of the second track groove 22 and on the inner-end side of the outer joint member relative to the joint center Oj; and an opening-side circular arc in which the curvature center of the ball-raceway center line y is at such a position on a radially inner side of the second track groove 22 as to be offset to an opening-side of the outer joint member relative to the joint center Oj and offset from the axis into the radially outer direction.

Reference symbol L in Figs. 13a, 13b, and 14 represents a normal angular range corresponding to a range in which, when the constant velocity universal joint forms a normal angle, each of the torque transmitting balls 3 comes into contact with the track grooves 11 and 12 of the outer joint member 1 and the track grooves 21 and 22 of the inner joint member 2. Further, reference symbol L' represents an operating-angle range which is larger than the normal angular range and has a relatively high frequency of use. In the track grooves 11 and 12 of the outer joint member 1 and the track grooves 21 and 22 of the inner joint member 2, parts corresponding to the operating-angle range L' which is larger than the normal angular range and has a relatively high frequency of use constitute the central track-groove portions 11b, 12b, 21b, and 22b.

As illustrated in Fig. 13b, when the inner joint member 2, the torque transmitting balls 3, and the cage 4 are incorporated in the outer joint member 1, the ball tracks for respectively housing the torque transmitting balls 3 are formed between the first track grooves 11 of the outer joint member 1 and the first track grooves 21 of the inner joint member 2 and between the second track grooves 12 of the outer joint member 1 and the second track grooves 22 of the inner joint member 2. Under the state in which the operating angle is 0°, the central track-groove portion 11b of each of the track grooves 11 of the outer joint member 1 and the central track-groove portion 21b of each of the first track grooves 21 of the inner joint member 2 forms such a wedge angle α as to open to the opening side of the outer joint member 1. Further, the central track-groove portion 12b of each of the second track grooves 12 of the outer joint member 1 and the central track-groove portion 22b of each of the second track grooves 22 of the inner joint member 2 forms such a wedge angle β as to open to the inner-end side of the outer joint member 1.

The forces which act respectively from the track grooves 11 and 12 of the outer joint member 1 and from the track grooves 21 and 22 of the inner joint member 2 to the torque transmitting balls 3 are counterbalanced each other by the wedge angle. Thus, it is possible to reduce spherical forces which act respectively between the cage 4 and the outer joint member 1 and between the cage 4 and the inner joint member 2. With this, in the operating-angle range L' which is larger than normal angular range and has a relatively high frequency of use, it is possible to suppress loss of torque-to-be-transmitted, and hence to achieve higher efficiency of the joint.

Further, in the fixed type constant velocity universal joint, the central track-groove portions 11b and 21b which form the wedge angle α and the central track-groove portions 12b and 22b which form the wedge angle β are formed only in a certain range including the joint center Oj in the axial direction (operating-angle range L' which is larger than normal angular range and has a relatively high frequency of use), the wedge angles α and being opposite to each other under the state in which the operating angle of the constant velocity universal joint is 0°. Each of the opening-side track-groove portions 11c and 12c connected respectively to the central track-groove portions 11b and 12b of the outer joint member 1, and the inner-end-side track grooves 21c and 22c connected respectively to the central track-groove portions 21b and 22b of the inner joint member 2 has such a shape as to be free from an undercut. Although undercuts are formed in the central track-groove portion 12b of each of the second track grooves 12 of the outer joint member 1 and the central track-groove portion 22b of each of the second track grooves 22 of the inner joint member 2, amounts of the undercuts are so minute as not to have an influence on forgeability. Accordingly, the outer joint member 1 and the inner joint member 2 can be easily forged, and hence near-net shaping at the time of forging can be achieved.

Further, in the circular-arc portion 11a formed on the inner-end side of the track groove 11 of the outer joint member 1, the curvature center of the ball-raceway center line x is positioned on the inner-end side relative to the joint center Oj, and in the circular-arc portion 12a formed on the inner-end side of the track groove 12 of the outer joint member 1, the curvature center of the ball-raceway center line x is positioned on the joint center Oj. Thus, in comparison with a case where the curvature centers of the ball-raceway center line are positioned on the opening side relative to the joint censer, a track depth at an innermost-end portion of each of the track grooves 11 and 12 can be increased. Accordingly, allowable load torque at high operating angles can be increased.

Still further, on the opening side of the track grooves 11 and 12 of the outer joint member 1 and on the inner-end side of the track grooves 21 and 22 of the inner joint member 2, the opening-side track-groove portions 11c and 12c and the inner-end-side track grooves 21c and 22c are respectively formed which have the same form as those in a conventional undercut-free joint (UJ). Thus, excessive load does not act on the cage 4 even at high operating angles. Therefore, the cage 4 is downsized, with the result that the joint can be downsized as a whole.

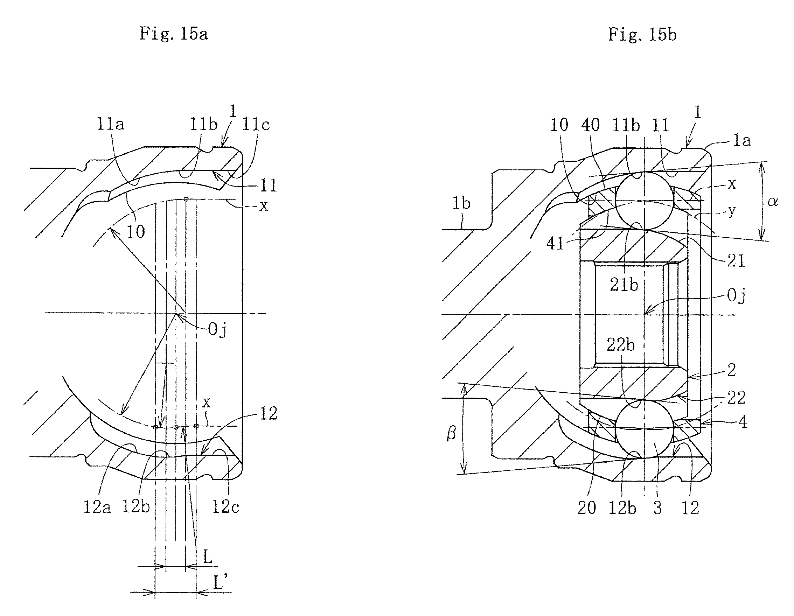

Figs. 15a and 15b illustrate an eleventh embodiment of the present invention. In the eleventh embodiment, the second track groove 12 of the outer joint member 1 has the same form as that in the tenth embodiment illustrated in Figs. 13a and 13b.

Meanwhile, unlike the tenth embodiment, in the eleventh embodiment, the central track-groove portion 11b of the first track groove 11 of the outer joint member 1 includes a part formed as a single circular arc continuous with the inner-end-side track-groove portion 11a and a linear part continuous with the opening-side track-groove portion 11c. That is, the first track groove 11 is formed as an undercut-free groove constituted by a single circular arc, in which the ball-raceway center line x has one curvature center, and a linear shape. In the inner-end-side track-groove portion 11a, the curvature center of the ball-raceway center line x is positioned on the opening side relative to the joint center Oj. The second track groove 12 of the outer joint member 1 has the same form as that in the tenth embodiment illustrated in Figs. 13a and 13b.

In the structure described above, under the state in which the operating angle is 0°, the wedge angle α opening to the opening side of the outer joint member is formed of the central track-groove portion 11b of the first track groove 11 of the outer joint member 1 and the central track-groove portion 21b of the first track groove 21 of the inner joint member 2, and the wedge angle β opening to the inner-end side of the outer joint member is formed of the central track-groove portion 12b of the second track groove 12 of the outer joint member 1 and the central track-groove portion 22b of the second track groove 22 of the inner joint member 2.

Figs. 16a and 16b illustrate a twelfth embodiment of the present invention. In the twelfth embodiment, the first track groove 11 of the outer joint member 1 has the same form as that in the eleventh embodiment illustrated in Figs. 15a and 5b.

In the eleventh embodiment, in the second track groove 12 of the outer joint member 1, the forms of the circular arc on the inner-end side of the central track-groove portion 12b relative to the joint center Oj and the inner-end-side track-groove portion 12a are different from those in the tenth embodiment illustrated in Figs. 15a and 15b. The circular arc on the inner-end side of the central track-groove portion 12b relative to the joint center Oj is formed as a single circular arc continuous with the inner-end-side track-groove portion 12a. In the circular arc, the curvature center of the ball-raceway center line x is formed at such a position as to be offset to the inner-end side relative to the joint center Oj and offset from the axis into the radially outer direction. The circular arc on the inner-end side and the circular arc on the opening side of the central track-groove portion 12b of the second track groove 12 of the outer joint member 1 are connected to each other in an S-shaped manner.

In the structure described above, under the state in which the operating angle is 0°, the wedge angle α opening to the opening side of the outer joint member is formed of the central track-groove portion 11b of the first track groove 11 of the outer joint member 1 and the central track-groove portion 21b of the first track groove 21 of the inner joint member 2, and the wedge angle β opening to the inner-end side of the outer joint member 1 is formed of the central track-groove portion 12b of the second track groove 12 of the outer joint member 1 and the central track-groove portion 22b of the second track groove 22 of the inner joint member 2.

As illustrated in the above-mentioned embodiments, although being formed in a circular-arc shape, the central track-groove portions 11b, 12b, 21b, and 22b each may be formed in an inclined linear shape instead thereof so as to be connected respectively to the inner-end-side track-groove portions 11a, 12a, 21a, and 22a, and the opening-side track-groove portions 11c, 12c, 21c, and 22c. In this case, it is desirable to effect connection with small rounds.

Note that, the center position of each of the circular arcs described above is merely illustrated as an example, and hence may be arbitrarily determined as long as each of the first track groove 11 of the outer joint member 1, the second track groove 12 of the outer joint member 1, the first track groove 21 of the inner joint member 2, and the second track groove 22 of the inner joint member 2 has such a form as to be free from an edge and smoothly continuous with each other.

## Claims

1. A fixed type constant velocity universal joint, comprising:
an outer joint member which has an inner spherical surface provided with a plurality of track grooves extending in an axial direction, and has an opening side and an inner-end side spaced apart from each other in the axial direction;
an inner joint member having an outer spherical surface provided with a plurality of track grooves extending in the axial direction;
torque transmitting balls arranged between the plurality of track grooves of the inner joint member and the plurality of track grooves of the outer joint member facing each other; and
a cage spherically fitting to both the inner spherical surface of the outer joint member and the outer spherical surface of the inner joint member, and holding the torque transmitting balls,
wherein wedge angles (α, β) are formed respectively between central track-groove portions (11b, 21b) and between central track-groove portions (12b, 22b), the central track-groove portions (11b, 12b, 21b, 22b) being positioned in a normal angular range of the plurality of track grooves (11, 12) of the outer joint member and the plurality of track grooves (21, 22) of the inner joint member facing each other,
wherein the plurality of track grooves (11, 12) provided to the outer joint member and the plurality of track grooves (21, 22) provided to the inner joint member comprise:
a first pair of track grooves (11, 21) respectively comprising the central track-groove portions (11b, 21b) forming therebetween the wedge angle (α) opening to the opening side of the outer joint member under a state in which an operating angle of the fixed type constant velocity universal joint is 0°; and
a second pair of track grooves (12, 22) respectively comprising the central track-groove portions (12b, 22b) oppositely forming therebetween the wedge angle (β) opening to the inner-end side of the outer joint member under the state in which the operating angle of the fixed type constant velocity universal joint is 0°,
wherein both the first track groove (11) and the second track groove (12) of the outer joint member comprise opening-side track-groove portions (11c, 12c) connected respectively to the central track-groove portions (11b, 12b) directly or through intermediation of respective intermediate track-groove portions (11d, 12d), each of the opening-side track-groove portions (11c, 12c) being formed in such a shape as to be free from an undercut toward the opening side, and
wherein the first track groove (21) and the second track groove (22) of the inner joint member are formed in such shapes as to be mirror-image symmetrical with the first track groove (11) and the second track groove (12) of the outer joint member as respective counterparts thereof with respect to a joint-center plane.

2. A fixed type constant velocity universal joint, comprising:
an outer joint member which has an inner spherical surface provided with a plurality of track grooves extending in an axial direction, and has an opening side and an inner-end side spaced apart from each other in the axial direction;
an inner joint member having an outer spherical surface provided with a plurality of track grooves extending in the axial direction;
torque transmitting balls arranged between the plurality of track grooves of the inner joint member and the plurality of track grooves of the outer joint member facing each other; and
a cage spherically fitting to both the inner spherical surface of the outer joint member and the outer spherical surface of the inner joint member, and holding the torque transmitting balls,
wherein wedge angles (α, β) are formed respectively between central track-groove portions (11b, 21b) and between central track-groove portions (12b, 22b), the central track-groove portions (11b, 12b, 21b, 22b) being positioned in a normal angular range of the plurality of track grooves (11, 12) of the outer joint member and the plurality of track grooves (21, 22) of the inner joint member facing each other,
wherein the plurality of track grooves (11, 12) provided to the outer joint member and the plurality of track grooves (21, 22) provided to the inner joint member comprise:
a first pair of track grooves (11, 21) respectively comprising the central track-groove portions (11b, 21b) forming therebetween the wedge angle (α) opening to the opening side of the outer joint member under a state in which an operating angle of the fixed type constant velocity universal joint is 0°; and
a second pair of track grooves (12, 22) respectively comprising the central track-groove portions (12b, 22b) oppositely forming therebetween the wedge angle (β) opening to the inner-end side of the outer joint member under the state in which the operating angle of the fixed type constant velocity universal joint is 0°,
wherein both the first track groove (11) and the second track groove (12) of the outer joint member comprise opening-side track-groove portions (11c, 12c) connected respectively to the central track-groove portions (11b, 12b) directly or through intermediation of respective intermediate track-groove portions (11d, 12d), each of the opening-side track-groove portions (11c, 12c) being formed to be linear in the axial direction,
wherein the first track groove (21) and the second track groove (22) of the inner joint member are formed in such shapes as to be mirror-image symmetrical with the first track groove (11) and the second track groove (12) of the outer joint member as respective counterparts thereof with respect to a joint-center plane, and
wherein both the first track groove (11) and the second track groove (12) of the outer joint member comprise inner-end-side track-groove portions (11a, 12a) connected respectively to the central track-groove portions (11b, 12b) directly or through intermediation of the respective intermediate track-groove portions (11d, 12d), each of the inner-end-side track-groove portions (11a, 12a) being formed in a curved shape.

3. A fixed type constant velocity universal joint, comprising:
an outer joint member which has an inner spherical surface provided with a plurality of track grooves extending in an axial direction, and has an opening side and an inner-end side spaced apart from each other in the axial direction;
an inner joint member having an outer spherical surface provided with a plurality of track grooves extending in the axial direction;
torque transmitting balls arranged between the plurality of track grooves of the inner joint member and the plurality of track grooves of the outer joint member facing each other; and
a cage spherically fitting to both the inner spherical surface of the outer joint member and the outer spherical surface of the inner joint member, and holding the torque transmitting balls,
wherein wedge angles (α, β) are formed respectively between central track-groove portions (11b, 21b) and between central track-groove portions (12b, 22b), the central track-groove portions (11b, 12b, 21b, 22b) being positioned in an operating-angle range which is larger than a normal angular range of the plurality of track grooves (11, 12) of the outer joint member and the plurality of track grooves (21, 22) of the inner joint member facing each other, and has a relatively high frequency of use,
wherein the plurality of track grooves (11, 12) provided to the outer joint member and the plurality of track grooves (21, 22) provided to the inner joint member comprise:
a first pair of track grooves (11, 21) respectively comprising the central track-groove portions (11b, 21b) forming therebetween the wedge angle (α) opening to the opening side of the outer joint member under a state in which an operating angle of the fixed type constant velocity universal joint is 0°; and
a second pair of track grooves (12, 22) respectively comprising the central track-groove portions (12b, 22b) oppositely forming therebetween the wedge angle (β) opening to the inner-end side of the outer joint member under the state in which the operating angle of the fixed type constant velocity universal joint is 0°,
wherein both the first track groove (11) and the second track groove (12) of the outer joint member comprise opening-side track-groove portions (11c, 12c) connected respectively to the central track-groove portions (11b, 12b), each of the opening-side track-groove portions (11c, 12c) being formed in such a shape as to be free from an undercut toward the opening side, and
wherein the first track groove (21) and the second track groove (22) of the inner joint member are formed in such shapes as to be mirror-image symmetrical with the first track groove (11) and the second track groove (12) of the outer joint member as respective counterparts thereof with respect to a joint-center plane.

4. A fixed type constant velocity universal joint according to any one of claims 1 to 3, wherein opening directions of the wedge angles (α, β) formed respectively between the central track-groove portions (11b, 21b) and between the central track-groove portions (12b, 22b) as the respective counterparts between the inner joint member and the outer joint member are free from being changed in the normal angular range and are set to be the same as opening directions of other wedge angles formed respectively therebetween at the operating angle of 0°.

5. A fixed type constant velocity universal joint according to any one of claims 1 to 4, wherein the opening-side track-groove portions (11c, 12c) connected respectively to the central track-groove portions (11b, 12b) are formed to be linear in the axial direction.

6. A fixed type constant velocity universal joint according to any one of claims 1 to 5, wherein a ball-raceway center line (x) of at least one of the plurality of track grooves (11, 12) of the outer joint member is partially formed in an inclined linear shape within a range of the central track-groove portion (11b).

7. A fixed type constant velocity universal joint according to any one of claims 1 to 5, wherein a ball-raceway center line (x) of at least one of the plurality of track grooves (11, 12) of the outer joint member has one curvature center within a range of the central track-groove portion (11b).

8. A fixed type constant velocity universal joint according to any one of claims 1 to 5, wherein a ball-raceway center line (x) of at least one of the plurality of track grooves (11, 12) of the outer joint member has two curvature centers within a range of the central track-groove portion (11b).

9. A fixed type constant velocity universal joint according to claim 8, wherein the two curvature centers are arranged respectively on a radially outer side and a radially inner side of each of the plurality of track grooves (11, 12) of the outer joint member.

10. A fixed type constant velocity universal joint according to any one of claims 1 to 9, wherein each of the plurality of track grooves of the outer joint member, which constitutes corresponding one of the wedge angle (α) opening to the opening side of the outer joint member and the wedge angle (β) opening to the inner-end side of the outer joint member under the state in which the operating angle is 0°, comprises a circular-arc portion (11a, 12a) arranged on the inner-end side relative to the central track-groove portion and having another curvature center of the ball-raceway center line (x) on a joint center.

11. A fixed type constant velocity universal joint according to any one of claims 1 to 9, wherein each of the plurality of track grooves of the outer joint member, which constitutes corresponding one of the wedge angle opening to the opening side of the outer joint member and the wedge angle opening to the inner-end side of the outer joint member under the state in which the operating angle is 0°, comprises a circular-arc portion (11a, 12a) arranged on the inner-end side relative to the central track-groove portion and having another curvature center of the ball-raceway center line (x) on an inner-end side relative to a joint center.

12. A fixed type constant velocity universal joint according to any one of claims 1 to 11, wherein a center of an outer spherical surface of the cage and a center of an inner spherical surface of the cage are arranged at the same position, the outer spherical surface of the cage fitting to the inner spherical surface of the outer joint member, the inner spherical surface of the cage fitting to the outer spherical surface of the inner joint member.

13. A fixed type constant velocity universal joint according to any one of claims 1 to 12, wherein the torque transmitting balls comprise six torque transmitting balls arranged in a circumferential direction.

14. A fixed type constant velocity universal joint according to any one of claims 1 to 12, wherein the torque transmitting balls comprise eight torque transmitting balls arranged in a circumferential direction.

15. A fixed type constant velocity universal joint according to any one of claims 1 to 14, wherein the plurality of track grooves (11) of the outer joint member, each of which constitutes the wedge angle (α) opening to the opening side of the outer joint member under the state in which the operating angle is 0°, and the plurality of track grooves (12) of the outer joint member, each of which constitutes the wedge angle (β) opening to the inner-end side of the outer joint member under the state in which the operating angle is 0°, are arranged one by one alternately in the circumferential direction.

16. A fixed type constant velocity universal joint according to any one of claims 1 to 14, wherein the plurality of track grooves (11) of the outer joint member, each of which constitutes the wedge angle (α) opening to the opening side of the outer joint member under the state in which the operating angle is 0°, and the plurality of track grooves (12) of the outer joint member, each of which constitutes the wedge angle (β) opening to the inner-end side of the outer joint member under the state in which the operating angle is 0°, are arranged two by two alternately in the circumferential direction.
